# EUROPEAN PATENT APPLICATION

(11) **EP 1 953 901 A1**
(43) Date of publication of application: **06.08.2008**
(21) Application number: 07706408.7
(22) Date of filing: 09.01.2007
(51) Int. Cl.: H02K 16/02, H02K 21/14, H02K 21/22

(54) **MOTOR AND DEVICE USING THE SAME**

(30) Priority: 13.01.2006 JP 2006005906
(71) Applicant: Matsushita Electric Industrial Co., Ltd., Kadoma-shi Osaka 571-8501 (JP)
(72) Inventor: NAKAGAWA, Yukinori c/o Matsushita Electric Industrial Co., Ltd, Chuo-ku, Osaka-shi Osaka, 540-6207 (JP); YOSHIKAWA, Yuichi c/o Matsushita Electric Industrial Co., Ltd, Chuo-ku, Osaka-shi Osaka, 540-6207 (JP); LI, Hu c/o Matsushita Electric Industrial Co., Ltd, Chuo-ku, Osaka-shi Osaka, 540-6207 (JP); MORISAKI, Masahiko c/o Matsushita Electric Industrial Co., Ltd, Chuo-ku, Osaka-shi Osaka, 540-6207 (JP); MURAKAMI, Hiroshi c/o Matsushita Electric Industrial Co., Ltd, Chuo-ku, Osaka-shi Osaka, 540-6207 (JP)
(74) Representative: Pautex Schneider, Nicole Véronique
(86) International application number: PCT/JP2007/050061
(87) International publication number: WO 2007/080841

(57) **Abstract**

A motor includes a stator which includes: a stator core having an annular stator yoke, a plurality of outer teeth projecting outward from the stator yoke, and a plurality of inner teeth having the same number of teeth as the outer teeth and projecting inward from the stator yoke; and a plurality of windings wound on the stator core, and the motor includes an outer rotor confronting the outer teeth via an air gap and an inner rotor confronting the inner teeth via an air gap. The outer rotor and the inner rotor have holes for accommodating permanent magnets respectively. The permanent magnets having a rectangular shape in sectional views thereof are accommodated in the holes.

## Description

### TECHNICAL FIELD

The present invention relates to a motor and a device using the same motor, more particularly it relates to a structure of a rotor of the motor.

### BACKGROUND ART

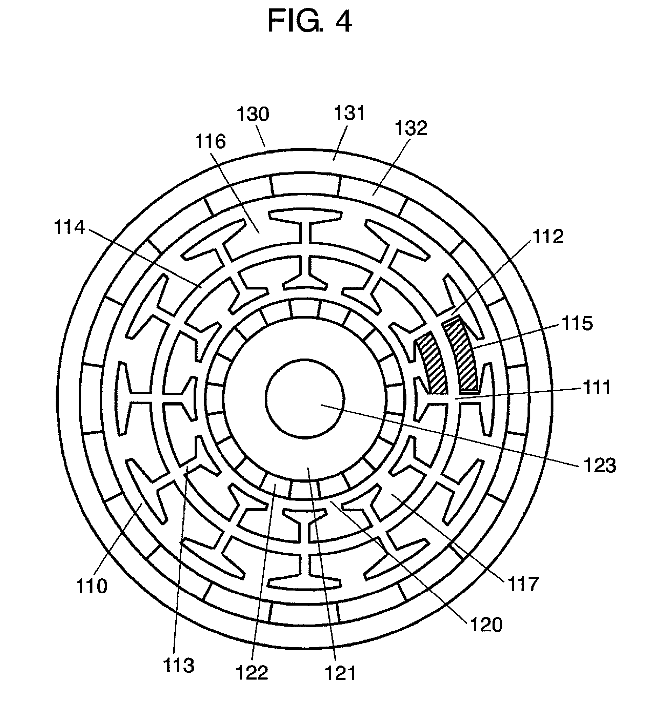

Fig. 4 shows a conventional brushless motor employing a toroidal method and having dual rotors. The brushless motor includes stator 110, inner rotor 120, and outer rotor 130.

Stator 110 is formed of stator core 111 and windings 115. Stator core 111 includes stator yoke 114 equipped with outer teeth 112 and inner teeth 113. Outer slots 116 are formed between each one of outer teeth 112, and inner slots 117 are formed between each one of inner teeth 113.

Stator yoke 114 is provided with a plurality of three-phase windings 115 of the toroidal method. Windings 115 are wound on stator yoke 114 in a concentrated manner, and accommodated in outer slots 116 and inner slots 117. Windings 115 are connected each other with a star connection or a delta connection.

Inner rotor 120 is directly connected to shaft 123, and held inside stator 110 rotatably. Inner rotor 120 further includes rotor yoke 121 and permanent magnets 122. Outer rotor 130 is also directly connected to shaft 123 and is held outside stator 110 rotatably. Outer rotor 130 further includes rotor yoke 131 and permanent magnets 132.

Inner rotor 120 and outer rotor 130 are rotated with the magnetic field produced by the electric current running through windings 115. In Fig. 4, permanent magnets 122 and 132 are placed on the surfaces of rotor cores 121 and 131, namely, they are the surface permanent magnet rotors. The structure of such a toroidal motor as discussed above is disclosed in, e.g. patent document 1.

Having dual rotors, this conventional motor can increase its output torque; however, since the magnets are bonded on the surface, the number of components including adhesive increases, and an arc-shaped magnet results in a higher processing cost. The cost of this motor has thus increased. On top of that, there has been a problem about reliability, i.e. when the motor spins at a high speed, magnets sometimes come off due to the centrifugal force.

Patent Document 1: Unexamined Japanese Patent Publication No. 2001 - 37133

### DISCLOSURE OF INVENTION

A motor of the present invention comprises the following elements:
a stator including:
   a stator core having:
      an annular stator yoke;
      a plurality of outer teeth projecting outward from the stator yoke; and
      a plurality of inner teeth having the same number of teeth as the outer teeth, and projecting inward from the stator yoke;
   a plurality of windings wound on the stator core; and
an outer rotor confronting the outer teeth via an air gap; and
an inner rotor confronting the inner teeth via an air gap.
The stator core includes outer slots formed between each one of the outer teeth, and also includes inner slots formed between each one of the inner teeth. The windings are wound on the stator yoke at sections between the outer slots and the inner slots. The toroidal windings are connected each other with a three-phase star or delta connection. The outer rotor includes an outer rotor yoke having holes where outer permanent magnets are accommodated. The inner rotor includes an inner rotor yoke having holes where inner permanent magnets are accommodated. The sectional views of both the outer and inner permanent magnets show rectangles. The structure discussed above allows a motor of the present invention to be downsized, produce greater torque, work more efficiently, and be available at a lower cost.

### BRIEF DESCRIPTION OF DRAWINGS

Fig. 1 shows a cross sectional view of a motor in accordance with a first embodiment of the present invention.
Fig. 2 shows a cross sectional view of a motor in accordance with a second embodiment of the present invention.
Fig. 3 shows a schematic diagram of a device in accordance with a third embodiment of the present invention.
Fig. 4 shows a cross sectional view of a conventional motor.

### DESCRIPTION OF REFERENCE MARKS

- 10: stator
- 11: stator core
- 12: outer teeth
- 13: inner teeth
- 14: stator yoke
- 15: winding
- 16: outer slot
- 17: inner slot
- 20: inner rotor
- 21: inner rotor yoke
- 22, 22A: inner permanent magnet
- 24: hole for accommodating inner permanent magnet
- 30: outer rotor
- 31: outer rotor yoke
- 32, 32A: outer permanent magnet
- 34: hole for accommodating outer permanent magnet
- 61: device
- 67: motor

### DESCRIPTION OF PREFERRED EMBODIMENTS

Exemplary embodiments of the present invention are demonstrated hereinafter with reference to the accompanying drawings.

### EMBODIMENT 1

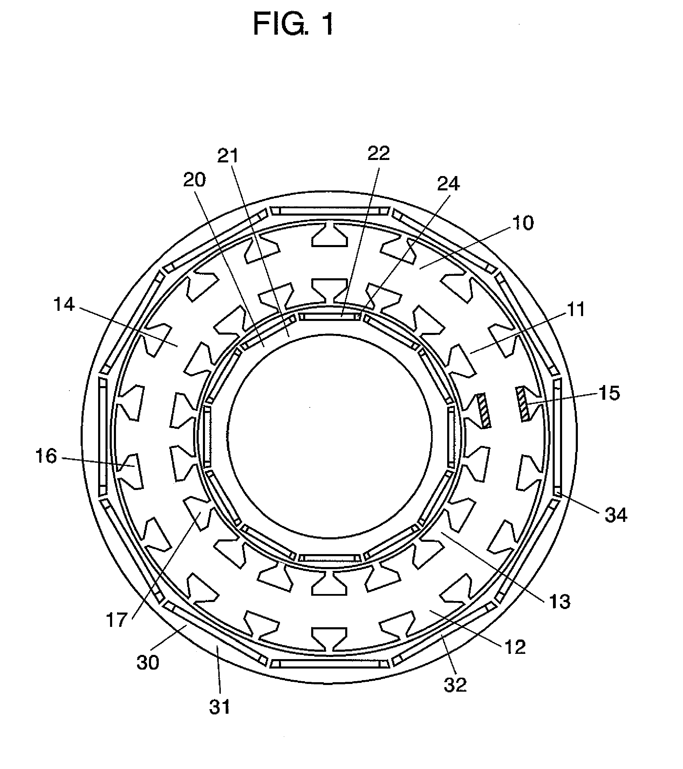

Fig. 1 shows a cross sectional view of a motor in accordance with the first embodiment of the present invention. The motor includes the following elements: stator 10, inner rotor 20 facing an inner wall of stator 10, and outer rotor 30 facing an outer wall of stator 10.

Stator core 11, one of structural elements of stator 10, includes the following elements: stator yoke 14 shaped like a ring, outer teeth 12 projecting outward from stator yoke 14 , and inner teeth 13 projecting inward from stator yoke 14 and having the same number of teeth as outer teeth 12. Outer slots 16 are formed between each one of outer teeth 12, and inner slots 17 are formed between each one of inner teeth 13. A plurality of windings 15 of toroidal winding method are connected each other with a three-phase star or delta connection, and wound on stator yoke 14 in a concentrated winding method at the sections between outer slots 16 and inner slots 17. Although windings 15 wound on the sections are accommodated in all the slots, Fig. 1 shows only one section as an example.

Outer rotor 30 is seated confronting outer teeth 12 with an air gap therebetween. Inner rotor 20 is seated confronting inner teeth 13 with an air gap therebetween. Outer rotor 30 includes outer rotor yoke 31 formed of layered electromagnetic steel plates and having holes 34 which accommodate permanent magnets 32, thereby forming outer magnetic poles. In a similar way to what is discussed above, inner rotor 20 includes inner rotor yoke 21 formed of layered electromagnetic steel plates and having holes 24 which accommodate permanent magnets 22, thereby forming inner magnetic poles. In other words, the outer magnetic poles are formed by accommodating permanent magnets 32 in holes 34 of outer rotor yoke 31. The inner magnetic poles are formed by accommodating permanent magnets 22 in holes 24 of inner rotor yoke 21.

Outer rotor 30 is joined to an outer rotor frame (not shown) by press-fit, shrinkage-fit or adhesion. Inner rotor 20 is also joined to an inner rotor frame (not shown) by press-fit, shrinkage-fit or adhesion. Although the inner rotor frame and the outer rotor frame are detachably configured, they are generally coupled to the shaft (not shown) and are rotated together by a given electric current supplied to windings 15.

As discussed previously, outer rotor 30 and inner rotor 20 have holes 34 and 24 respectively, and outer permanent magnets 32 and inner permanent magnets 22 are accommodated in holes 34 and 24 respectively. There are as many holes 34 as holes 24, and a sectional view of each hole shapes like a trapezoid. The rotor yoke between the holes adjacent to each other has a uniform thickness. Outer hole 34 has a longer length along the circumference direction than inner hole 24, and both holes 34 and 24 have the same length along the radius direction. Magnets 32 are inserted into holes 34, and magnets 22 are inserted into holes 24. Those magnets are fixed in the holes by bonding. A sectional view of each one of the magnets shows a rectangle, and outer magnets 32 have a longer length along the circumference direction than inner magnets 22. Both of magnets 32 and 22 have the same length along the radius direction.

Outer permanent magnets 32 and inner permanent magnets 22 are both magnetized to N pole and S pole alternately. The electric current running through the windings wound in outer slots 16 produces torque at outer rotor 30, and the electric current running through the windings wound in inner slots 17 produces torque at inner rotor 20, so that the electric current produces greater torque than the torque produced by the same amount of current used in conventional motors. On top of that, the structure of interior permanent magnets additionally produces reluctance torque, so that the motor of the present invention can be downsized, and yet produce greater torque and work more efficiently The concentrated winding method employed in windings 15 allows increasing the space factor of the windings, so that a smaller coil end is obtainable, which also increases the efficiency.

This first embodiment employs rectangular shaped magnets as outer permanent magnets 32 and inner permanent magnets 22. The shape is different from an arc shape used in the conventional interior permanent magnet, and the rectangular shape can greatly reduce the processing cost of the magnet. As a result, a lower cost can be achieved in addition to a smaller size, greater torque and higher efficiency.

### EMBODIMENT 2

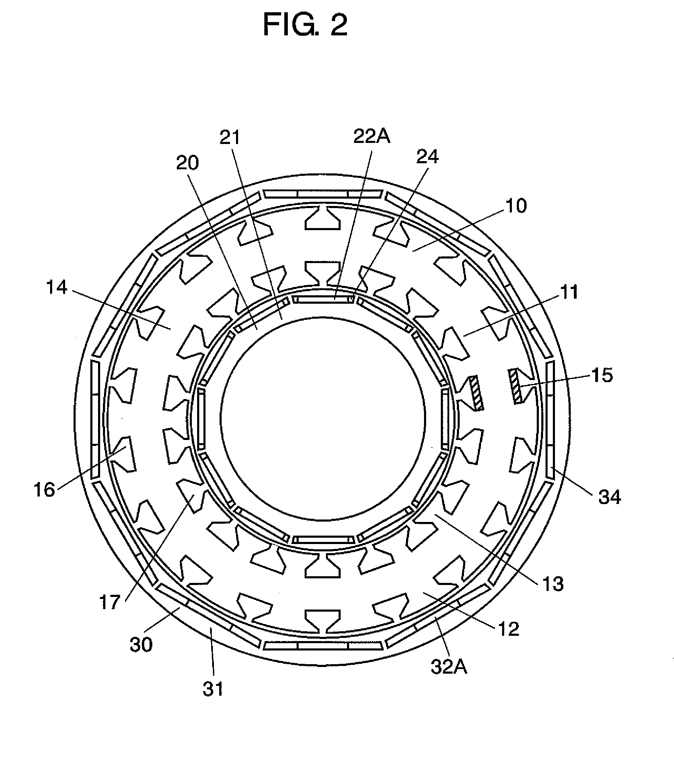

Fig. 2 shows a cross sectional view of a motor in accordance with the second embodiment of the present invention. Similar to the motor described in the first embodiment, the motor in accordance with the second embodiment includes the following elements: stator 10, inner rotor 20 facing an inner wall of stator 10, and outer rotor 30 facing an outer wall of stator 10; however, this motor differs from that of the first embodiment only in the shape of the permanent magnet. Similar elements to those in the first embodiment thus have the same reference marks and the descriptions thereof are omitted here.

In this second embodiment, outer permanent magnet 32A has the same shape as inner permanent magnet 22A, and therefore, magnet 32A has a length along the circumference direction and a length along the radius direction identical to those lengths of magnet 22A. Magnets 32A and 22A can be thus manufactured with one mold, and as a result, the cost can be reduced. Similar to the first embodiment, outer hole 34 has a longer length than inner hole 24, so that outer hole 34 has a greater air gap at both sides of permanent magnet 32A along the circumference direction than the one used in the first embodiment. Magnet 32A thus needs to be positioned and fixed in hole 34 with a jig before it is bonded in hole 34. Outer hole 34 can be shortened along the circumference direction so that magnet 32A can fit into hole 34.

Outer permanent magnet 32A can be made of material different from that of inner permanent magnet 22A. For instance, magnet 32A employs rare-earth based magnet and magnet 22A employs ferrite based magnet. This structure allows adjusting a balance of magnetic flux of the permanent magnets between outer rotor 30 and inner rotor 20, so that the magnetic flux of the permanent magnets can be used more effectively As a result, producing the same output, the motor can be downsized and available at a lower cost.

### EMBODIMENT 3

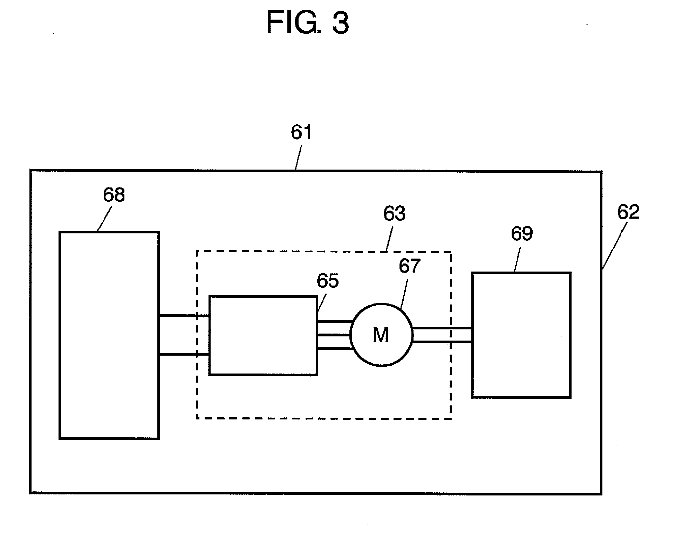

Fig. 3 shows a schematic diagram of a device in accordance with the third embodiment of the present invention. In Fig. 3, device 61 includes the following elements: housing 62, motor 67 mounted in housing 62, driver 65 for driving motor 67, power supply 68 for feeding driver 65 with electric power, and load 69 such as a mechanism to be driven by a power source, i.e. motor 67.

Motor 67 and driver 65 form motor driving device 63. In device 61, motor 67 is driven by power supply 68 via driver 65, and rotary torque is transferred to load 69 via an output shaft of motor 67. The motors in accordance with the first and the second embodiments are suitable as motor 67.

Device 61 is thus advantageously used as household electric products or automotive electric products which need a motor to be small enough to fit in a limited space and produce a great output.

### INDUSTRIAL APPLICABILITY

The present invention is useful for a motor to be used in household electronic products or automotive electronic products. The motor should be small enough to fit in a limited space and produce great output efficiently at a low cost.

## Claims

1. A motor comprising:
a stator including:
a stator core having:
an annular stator yoke;
a plurality of outer teeth projecting outward from the stator yoke; and
a plurality of inner teeth having an identical number of teeth to that of the outer teeth, and projecting inward from the stator yoke;
a plurality of windings wound on the stator core; and
an outer rotor confronting the outer teeth via an air gap; and
an inner rotor confronting the inner teeth via an air gap,
wherein the stator core includes outer slots formed between each one of the outer teeth, and also includes inner slots formed between each one of the inner teeth,
wherein the windings are wound on the stator yoke at sections located between the outer slots and the inner slots, and form toroidal windings connected each other with a three-phase star or delta connection,
wherein the outer rotor includes an outer rotor yoke having outer holes where outer permanent magnets are accommodated, and the inner rotor includes an inner rotor yoke having inner holes where inner permanent magnets are accommodated, and
wherein both the outer and inner permanent magnets show rectangles in sectional views thereof.

2. The motor of claim 1, wherein the outer permanent magnets and the inner permanent magnets are fixed with adhesive in the outer holes and the inner holes respectively.

3. The motor of claim 1, wherein the outer permanent magnets have an identical length, shown in a sectional view thereof, along a radius direction to that of the inner permanent magnets.

4. The motor of claim 1, wherein the outer permanent magnets have a longer length, shown in a sectional view thereof, along a circumference direction than that of the inner permanent magnets.

5. The motor of claim 1, wherein the windings are wound in an alignment winding manner.

6. The motor of claim 1, wherein the outer permanent magnets have an identical shape, shown in a sectional view thereof, to that of the inner permanent magnets.

7. The motor of claim 1, wherein the outer permanent magnets are made of material different from that of the inner permanent magnets.

8. A device using a motor as defined in any one of claim 1- claim 7.
